# EUROPEAN PATENT APPLICATION

(11) **EP 4 797 802 A1**
(43) Date of publication of application: **26.08.2026**
(21) Application number: 24879671.6
(22) Date of filing: 11.10.2024
(51) Int. Cl.: H04W 48/08, H04W 72/0446, H04W 84/12

(54) **COMMUNICATION DEVICE, CONTROL METHOD, AND PROGRAM**

(30) Priority: 18.10.2023 JP 2023179769
(71) Applicant: Canon Kabushiki Kaisha, Tokyo 146-8501 (JP)
(72) Inventor: INOHIZA, Hirohiko, Tokyo 146-8501 (JP)
(74) Representative: Canon Europe Limited
(86) International application number: PCT/JP2024/036497
(87) International publication number: WO 2025/084246

(57) **Abstract**

A communication apparatus that establishes a first network, and performs, with another communication apparatus belonging to the first network, communication compliant with an IEEE 802.11 standard series using one of a first channel access scheme, in which at least a predetermined Primary in one link is used, and a second channel access scheme, in which, in a case where a period is set during which the other communication apparatus does not perform transmission of a radio frame using the Primary channel due to communication in a second network different from the first network, the Primary channel is not used and one or more Non-Primary channels different from the Primary channel among a plurality of channels included in the link are used, notifies, to the other communication apparatus, information indicating a threshold relating to a length of the period and according to which the other communication apparatus is permitted to use the second channel access scheme in a case where the length of the period set in the other communication apparatus exceeds the threshold.

## Description

### TECHNICAL FIELD

The present disclosure relates to a data communication technique for use in a communication apparatus capable of communication using a communication link formed by a plurality of channels.

### BACKGROUND ART

With an increase in the amount of data communicated in recent years, communication techniques such as a wireless local area network (LAN) are under development. As the major wireless LAN communication standards, the IEEE (Institute of Electrical and Electronics Engineers) 802.11 standard series is known. The IEEE 802.11 standard series includes the IEEE 802.11a/b/g/n/ac/ax/be standards, and so forth. For further improvement in communication reliability, the development of the IEEE 802.11bn standard as a successor standard of the IEEE 802.11be standard is now underway. In the IEEE 802.11 Working Group (WG) for formulating the IEEE 802.11bn standard, the goals, the study range, and so forth are defined in UHR SG, and the details of the content of the technique to be included in this standard are scheduled to be defined in TGbn. Note that UHR SG is an abbreviation for Ultra High Reliability Study Group. Also, TGbn is an abbreviation for Task Group bn.

As one of the candidate techniques included in the IEEE 802.11bn standard, a technique for efficiently using a frequency resource in a communication method using a communication link formed by a plurality of channels has been studied. For example, PTL 1 describes a technique by which, in a case where a Primary Channel cannot be used to acquire a transmission right, another channel is used to perform communication.

### CITATION LIST

### PATENT LITERATURE

PTL 1: U.S. Patent No. 11696353

### SUMMARY OF INVENTION

### TECHNICAL PROBLEM

The present disclosure provides a technique for enabling more efficient use of a frequency resource in a communication system that uses a communication link formed by a plurality of channels.

### SOLUTION TO PROBLEM

A communication apparatus according to one aspect of the present embodiment is a communication apparatus for performing communication compliant with an IEEE 802.11 standard series, the communication apparatus comprising: communication means for establishing a first network, and performing communication with another communication apparatus belonging to the first network using one of a first channel access scheme, in which at least a predetermined Primary in one link is used, and a second channel access scheme, in which, in a case where a period is set during which the other communication apparatus does not perform transmission of a radio frame using the Primary channel due to communication in a second network different from the first network, the Primary channel is not used and one or more Non-Primary channels different from the Primary channel among a plurality of channels included in the link are used; and notification means for notifying, to the other communication apparatus, information indicating a threshold relating to a length of the period and according to which the other communication apparatus is permitted to use the second channel access scheme in a case where the length of the period set in the other communication apparatus exceeds the threshold.

### ADVANTAGEOUS EFFECTS OF INVENTION

According to the present disclosure, it is possible to more efficiently use a frequency resource in a communication system that uses a communication link formed by a plurality of channels.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing an example of a configuration of a wireless communication system.
FIG. 2A is a schematic diagram showing an example of a time chart when a communication apparatus transmits data.
FIG. 2B is a schematic diagram showing an example of a time chart when the communication apparatus transmits data.
FIG. 3 is a diagram showing an example of a hardware configuration of the communication apparatus.
FIG. 4 is a diagram showing an example of a functional configuration of an AP.
FIG. 5 is a diagram showing an example of a functional configuration of an STA.
FIG. 6 is a diagram showing an example of a flow of processing executed by the communication apparatus.
FIG. 7A is a diagram showing an example of an information element notified from the AP to the STA.
FIG. 7B is a diagram showing an example of an information element notified from the AP to the STA.
FIG. 7C is a diagram showing an example of an information element notified from the AP to the STA.
FIG. 8A is a diagram showing an outline of control executed.
FIG. 8B is a diagram showing an outline of control executed.
FIG. 9A is a diagram showing an outline of control executed.
FIG. 9B is a diagram showing an outline of control executed.
FIG. 10 is a diagram illustrating a method for setting a threshold.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### (System Configuration)

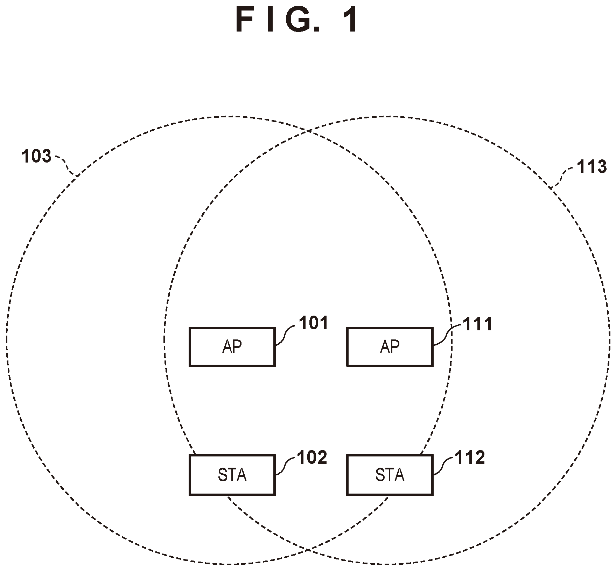

FIG. 1 shows an example of a configuration of a wireless communication system according to the present embodiment. The wireless communication system includes, for example, an access point (AP 101) and a station (STA 102). Each of the AP 101 and the STA 102 is a communication apparatus capable of executing wireless communication compliant with the IEEE 802.11 standard series. In the present embodiment, in a case where there is no need to distinguish between the AP 101 and the STA 102, these may be collectively referred to as a communication apparatus. IEEE is an abbreviation for Institute of Electrical and Electronics Engineers. FIG. 1 shows a configuration in which the STA 102 has joined a network 103 established by the AP 101. The network 103 may also be referred to as a Basic Service Set (BSS). Note that FIG. 1 shows a state in which a network 113 formed by an AP 111 and an STA 112 exists in the vicinity of the network 103 formed by the AP 101 and the STA 102. As in the case of the AP 101 and the STA 102, the AP 111 and the STA 112 are communication apparatuses capable of executing wireless communication compliant with the IEEE 802.11 standard series. For the AP 101 and the STA 102, the network 103 is a BSS to which they are connected, and may be referred to as their own BSS. On the other hand, for the AP 101 and the STA 102, the network 113 is a network that may interfere with their own BSS, and may be referred to as an Overlapping BSS (OBSS). Note that, although FIG. 1 shows an example in which one AP and one STA exist in each of the two networks, a plurality of APs and a plurality of STAs may exist in one network. In that case, the plurality of STAs may be connected to one AP, or one STA may be connected to a plurality of APs. Note that, although the following description is focused on the AP 101 and the STA 102, the AP 111 and the STA 112 may also have the same functions as the AP 101 and the STA 102.

In the present embodiment, the AP 101 and the STA 102 are configured to be capable of executing a communication method compliant with the IEEE 802.11bn standard. The IEEE 802.11bn standard is a successor standard of the IEEE 802.11be standard, and aims at a maximum transmission rate of 46.08 Giga bit per second (Gbps). According to the IEEE 802.11bn standard, a function that realizes highly reliable communication, low latency communication, an improved throughput in a case of communication traffic congestion, and so forth is scheduled to be implemented as a main feature. A radio frame used in a communication method compliant with this standard may be referred to as an Ultra High Reliability (UHR) PPDU. PPDU is an abbreviation for PLCP Protocol Data Unit, and PLCP is an abbreviation for Physical Layer Convergence Protocol. Note that the names "UHR" and "IEEE 802.11bn" and the like may be changed to different names when the formulation of these standards has been completed. It should be appreciated that the present specification and the claims appended thereto are applicable to any communication apparatus that uses all the successor standards of the IEEE 802.11be. The communication apparatus may support at least one legacy standard prior to the IEEE 802.11bn standard. The legacy standards are the IEEE 802.11a/b/g/n/ac/ax/be standards, for example. The communication apparatus may support other communication standards such as Bluetooth (registered trademark), NFC, UWB, ZigBee, and MBOA. Note that UWB is an abbreviation for Ultra Wide Band, and MBOA is an abbreviation for Multi Band OFDM Alliance. NFC is an abbreviation for Near Field Communication. UWB includes wireless USB, wireless 1394, WiNET, and so forth. The communication apparatus may support a communication standard such as wired LAN. The AP 101 can be, for example, but is not limited to, a wireless LAN router, a personal computer (PC), and the like. The AP 101 may be an information processing apparatus, such as a wireless chip, capable of executing wireless communication that supports the IEEE 802.11bn standard and the like. The STA 102 can be, for example, but is not limited to, a camera, a tablet, a smartphone, a PC, a mobile phone, a video camera, a headset, and the like. The STA 102 may be an information processing apparatus, such as a wireless chip, capable of executing wireless communication that supports the IEEE 802.11bn standard.

The communication apparatus may transmit and receive radio signals using frequency bands such as the 2.4 GHz band, the 3.6 GHz band, the 5 GHz band, and the 6 GHz band, as well as the 45 GHz band, the 60 GHz band, and the like that are called millimeter wave bands. The frequency bands used by the communication apparatus are not limited thereto, and may include, for example, a Sub1 GHz band, and the like. The communication apparatus may perform communication using bandwidths of 20 MHz, 40 MHz, 80 MHz, 160 MHz, 320 MHz, 540 MHz, 640 MHz, 1080 MHz, and 2160 MHz. The bandwidths used by the communication apparatus are not limited thereto. For example, bandwidths of 240 MHz, 4 MHz, and so forth may be used. Note that, in the IEEE 802.11 standard series, a frequency channel that uses a bandwidth of 20 MHz is defined as a basic channel in frequency bands such as 2.4 GHz, 5 GHz, and 6 GHz bands. Also, in this standard, a plurality of channels that can be used in frequency bands such as the 2.4 GHz band, the 5 GHz band, and the 6 GHz band are defined. Note that, in this standard, the communication apparatus can use a given channel in combination with another adjacent channel. Using a given channel in combination with another adjacent channel in this way may be referred to as channel bonding. A channel bundle formed by one channel, or two or more channels adjacent to each other may be referred to as a communication link (link). That is, one link formed by two channels with a bandwidth of 20 MHz may use a bandwidth of 40 MHz. In the IEEE 802.11be standard, a bandwidth of 320 MHz is scheduled to be defined as a maximum bandwidth that can be used in one link. Signals transmitted in this bandwidth may be either continuous or discontinuous on a frequency axis. Note that the AP 101 and the STA 102 may be an AP MLD (Multi-Link Device) and an STA MLD each supporting Multi-Link in which a plurality of links are simultaneously established to perform communication.

When transmitting a signal using a link established with another communication apparatus, the communication apparatus executes a carrier sense, thereby determining whether or not transmission is possible. A carrier sense is an operation performed by the communication apparatus to determine the presence or absence of a signal on a channel that the communication apparatus is to use for transmission. For example, the communication apparatus measures the strength (reception signal strength) of a signal received on the channel, and determines that a signal exists if the reception signal strength exceeds a predetermined threshold (physical carrier sense). The reception signal strength may also be referred to as a Received Signal Strength Indicator (RSSI). Also, the communication apparatus may determine the presence or absence of a signal based on information such as a Duration field included in the signal received on the channel (virtual carrier sense). For example, the communication apparatus stores, in itself, a period indicated by the Duration field included in the received signal as a Network Allocation Vector (NAV). The communication apparatus may handle the stored NAV as a period during which the communication apparatus is prohibited from transmitting a radio frame. In the present embodiment, an operation executed by the communication apparatus to set a period during which the communication apparatus does not perform transmission based on information such as the Duration field of the received signal will be referred to as setting an NAV. That is, until the NAV set on the channel expires, the communication apparatus determines that a signal exists on the channel. In this manner, the communication apparatus determines whether or not a signal exists on the channel, based on a result of executing a physical carrier sense and a virtual carrier sense. If it is determined that a signal exists on the channel, the communication apparatus may determine that transmission is not possible. The state of the channel in this case may be referred to as a busy state. On the other hand, a state in which no signal has been detected on the channel in a carrier sense, and in which no NAV is set may be referred to as an idle state. In a case where the channel is in the idle state, the communication apparatus may determine that transmission is possible.

When performing communication using a link with a bandwidth of 160 MHz, for example, the communication apparatus may determine whether or not transmission is possible using only a first channel with a bandwidth of 20 MHz included in that link. The first channel may be referred to as a Primary Channel (PCH). For example, the IEEE 802.11 standard series describes that the communication apparatus can start transmission if it is determined that transmission is possible as a result of executing a carrier sense on the PCH over a predetermined period. The predetermined period is set by an Interframe Space (IFS) defined for each access category for classifying the type of communication traffic, and a random number (backoff counter) that is randomly determined from a predetermined range. That is, if it is determined that the PCH is in the idle state over the predetermined period, the communication apparatus acquires a transmission right for performing transmission using the link. At this time, if a second channel other than the PCH is in the idle state in a PIFS period immediately before the start of transmission, the communication apparatus may perform transmission by channel bonding using the channel in the idle state and the PCH. PIFS is an abbreviation for Priority Interframe Space. If it is determined that transmission is not possible as a result of performing a carrier sense on the PCH, the communication apparatus may defer transmission even if another channel included in the same link is in the idle state. Note that each of the second channels constituting one link other than the PCH may be referred to as a Secondary Channel (SCH) or a Non-Primary channel (NPCH).

In a case where a signal is being received in a given channel in the communication apparatus, when a signal is transmitted in another channel (e.g., an adjacent channel, etc.) placed at a frequency close to that channel, the signal being received may not be received appropriately. For example, let us assume that the communication apparatus can simultaneously execute transmission processing and reception processing using channels that are different from each other. In a case where the communication apparatus is performing reception using a given channel, when transmission is performed on an adjacent channel, the power of a transmission signal leaks into a channel of a reception signal, thus causing interference in the reception signal. In general, the power resulting from such leakage of the transmission signal is far greater than the received power of the reception signal. Therefore, it is envisaged that appropriate reception of the reception signal cannot be performed. To avoid such a situation, the IEEE 802.11 standard series provides a mechanism by which, while a communication apparatus is transmitting a signal, another communication apparatus is prevented from transmitting a signal using a channel adjacent to the PCH in relation to that communication apparatus. That is, the standard prescribes that a PCH is provided as a channel that is commonly used between communication apparatuses to determine whether or not transmission is possible, and that, while one communication apparatus is performing transmission using the PCH, the other communication apparatus does not perform transmission even in a case where the other channel is in the idle state. Accordingly, while a communication apparatus is transmitting a signal and a PCH is used, another communication apparatus does not transmit a signal using a channel adjacent to the PCH. As a result, a situation where the communication apparatus receives a signal on the adjacent channel is avoided. Therefore, it is possible to overcome the problem of interference caused by power leakage occurring between the channels described above.

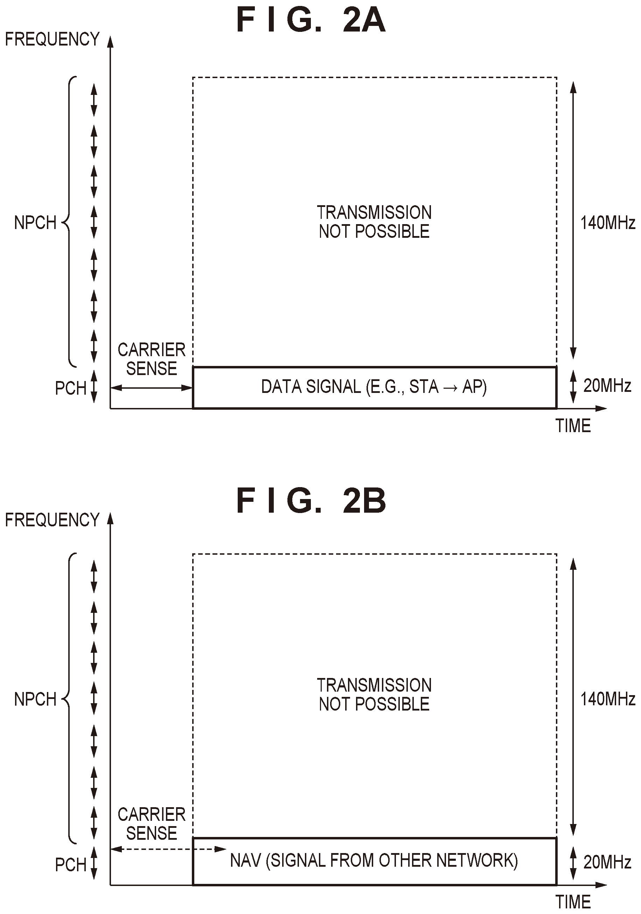

However, another channel (NPCH) in the idle state being not used based on the fact that the PCH is in the busy state may prevent efficient use of the overall frequency resource of the link. FIG. 2A shows an example of a time chart in a case where the STA 102 transmits data to the AP 101. In FIG. 2A, after confirming that a PCH is in the idle state by executing a carrier sense on the PCH, the STA 102 transmits data using the PCH with a bandwidth of 20 MHz. In this case, for example, even if seven NPCHs other than the PCH are in the idle state, another communication apparatus is not permitted to perform communication using the NPCHs. FIG. 2B shows another example of a time chart in a case where the STA 102 transmits data to the AP 101. In FIG. 2B, while the STA 102 is executing a carrier sense on a PCH, the PCH is used by another network (e.g., the network 113 in FIG. 1) that exists in geographical proximity to the STA 102. In this case, the PCH is determined to be in the busy state in the carrier sense executed by the STA 102. Therefore, for example, even if seven NPCHs other than the PCH are in the idle state, the STA 102 is not permitted to perform communication with the AP 101 using the NPCHs. However, since the AP 101 is not performing transmission at this time, the AP 101 may appropriately receive a signal transmitted by the STA 102 even if the STA 102 performs transmission to the AP 101 using the NPCHs. When the remaining NPCHs in the idle state that correspond to 140 MHz are not utilized, due to, for example, a PCH with a bandwidth of 20 MHz being used by another network in this manner, it is not possible to efficiently use the frequency resource.

In view of such circumstances, the present embodiment provides a function for, in a case where a PCH is used by another communication apparatus, performing communication between communication apparatuses using an NPCH included in the same link as the PCH, without using the PCH. As an example, the communication apparatus sets a Secondary Primary Channel (SPCH) used for acquiring a transmission right for performing transmission using an NPCH in a case where the PCH is in the busy state. An SPCH refers to one or more channels of NPCHs included in the same link as the PCH. If it is determined that the PCH is used by another communication apparatus, the communication apparatus subsequently determines whether or not transmission is possible on the SPCH. That is, the communication apparatus executes the above-described carrier sense on the SPCH, and, based on the confirmation that the SPCH is in the idle state, determines that communication using the NPCH can be performed. Then, if it is determined that transmission is possible on the SPCH, the communication apparatus performs transmission using one or more NPCHs including the SPCH. In the present embodiment, a communication method that performs transmission using one or more channels including the SPCH, without using the PCH will be referred to as Non-Primary channel Access (NPCH access). Note that this communication method may be referred to by a different name. For example, this communication method may be referred to as Secondary Channel Access (SCA). In a case where the PCH is usable, the communication apparatus performs communication using a first communication method in which communication is performed in one communication link that uses the PCH and one or more NPCHs. On the other hand, in a case where a certain additional condition (e.g., that no NPCH is being used) is satisfied, provided that the PCH is not usable, the communication apparatus is configured to be capable of executing communication using a second communication method (NPCH access).

Here, as shown in FIG. 2B, for example, in a case where an NAV is set on a PCH as a result of the PCH being used by an OBSS, the communication apparatus can perform communication using NPCH access in a case where an SPCH is usable. However, if the period of the NAV is not sufficiently long, the duration of the NAV on the PCH may elapse during communication using the NPCH access, and the NPCH access may be continued even though the PCH is in the idle state. For this reason, it is important that NPCH access ends before completion of the NAV. To this end, the communication apparatus according to the present embodiment may be configured not to execute NPCH access in a case where the period of the NAV does not sufficiently remain on the PCH (due to communication using an OBSS). On the other hand, the reference for determining that the period of the NAV "sufficiently remains" is not necessarily clear. Also, in a case where the length of the period of the NAV for determining that the duration of the NAV "sufficiently remains" is individually set in each of the communication apparatuses, it may be impossible to secure the fairness of opportunities for channel access between these communication apparatuses.

For this reason, in the present embodiment, for example, the AP 101 notifies, to an STA such as the STA 102 to which it is currently connected, information indicating a threshold of the length of the period of the NAV on the PCH for determining whether or not to execute NPCH access. Then, when an NAV on the PCH is set due to communication using the OBSS, the STA executes, based on the notification, NPCH access if the remaining length of the NAV is greater than or equal to the notified threshold. If the remaining length of the NAV is less than the notified threshold, the STA does not execute NPCH access. Note that the AP 101 may individually notify the information regarding the threshold to, for example, the STA to which it is currently connected, or may notify the information regarding the threshold to a plurality of STAs all at once via multicast or broadcast. This enables the STAs connected to the AP 101 to fairly acquire a transmission right using NPCH access.

### (Apparatus Configuration)

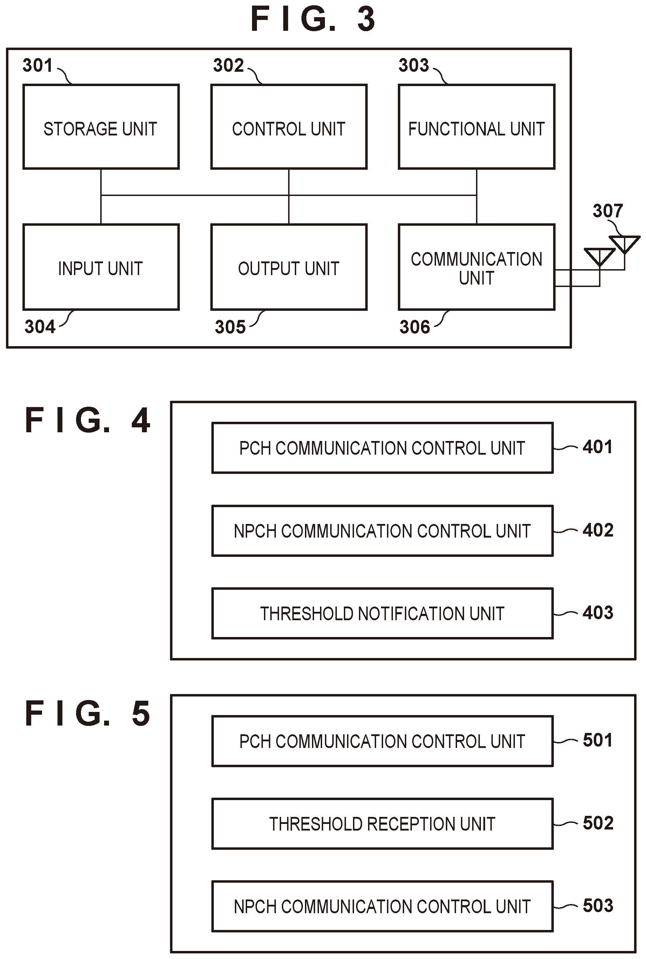

FIG. 3 shows an example of a hardware configuration of the communication apparatus (AP 101, AP 111, STA 102, and STA 112). The communication apparatus includes a storage unit 301, a control unit 302, a functional unit 303, an input unit 304, an output unit 305, a communication unit 306, and an antenna 307. Note that these are merely examples, and the communication apparatuses may include additional configurations that are not shown in FIG. 3, or all or part of the configurations shown in FIG. 3 may be replaced by other configurations having the same functions.

The storage unit 301 includes one or more memories such as a ROM and a RAM. The storage unit 301 stores a computer program for performing various operations described later, and various types of information such as communication parameters for wireless communication. Note that ROM is an abbreviation for read only memory, and RAM is an abbreviation for random access memory. Note that the storage unit 301 may include, in addition to a memory such as a ROM or a RAM, a storage medium such as a flexible disk, a hard disk, an optical disk, a magneto-optical disk, a CD-ROM, a CD-R, magnetic tape, a nonvolatile memory card, or a DVD. Also, the storage unit 301 may include a plurality of storage media such as memories.

The control unit 302 includes, for example, one or more processors such as a CPU and an MPU. Note that CPU is an abbreviation for central processing unit, and MPU is an abbreviation for micro processing unit. The control unit 302 performs overall control of the communication apparatus by executing a computer program stored in the storage unit 301. Note that the control unit 302 may perform overall control of the apparatus by the computer program stored in the storage unit 301 and an operating system working cooperatively with each other. In addition, the control unit 302 generates data and signals (radio frames) that are to be transmitted during communication with another communication apparatus. The control unit 302 may include a plurality of processors such as multi-core processors, and perform overall control of the communication apparatus using the plurality of processors.

The control unit 302 controls the functional unit 303 to execute predetermined processing such as wireless communication, image capturing, printing, and projection. The functional unit 303 includes hardware for the communication apparatus to execute the predetermined processing. In a case where the communication apparatus is a printer, the functional unit 303 is a printing device, and prints image data obtained via the communication unit 306, for example. In a case where the communication apparatus is a scanner, the functional unit 303 is a reading device, and externally outputs image data generated through scanning via the communication unit 306, for example. In a case where the communication apparatus is a camera, the functional unit 303 includes an image sensor and a lens, and externally outputs image data captured by the camera via the communication unit 306, for example.

The input unit 304 includes, for example, a touch panel, a hardware key, a button, or the like, and receives various operations from the user. The output unit 305 includes a display, a speaker, and the like, and performs various outputs to the user. Here, output by the output unit 305 may be screen display output onto a display, or a voice output using a speaker. The output unit 305 may include a vibrator, and may perform information output by vibration output. Note that both the input unit 304 and the output unit 305 may be implemented by one module, such as a touch panel display. The input unit 304 and the output unit 305 may be built in the communication apparatus, or may be implemented by an external input/output device. In this case, the communication apparatus includes an input/output interface for connection to the input/output device.

The communication unit 306 executes control for performing wireless communication compliant with the IEEE 802.11bn standard. In addition, the communication unit 306 may perform control of wireless communication compliant with other IEEE 802.11 standard series, in addition to the IEEE 802.11bn standard, and control of wired communication such as wired LAN. The communication unit 306 controls the antenna 307 to transmit and receive signals for wireless communication that have been generated by the control unit 302. For example, the communication apparatus communicates data such as image data, document data, and video data with a counterpart apparatus via the communication unit 306. Note that, in a case where the communication apparatus supports the NFC standard, the Bluetooth standard, and the like, in addition to the IEEE 802.11bn standard, the communication unit 306 may control wireless communication compliant with these communication standards. In a case where the communication apparatus is capable of executing wireless communication compliant with a plurality of communication standards, communication units and antennas supporting those communication standards may be separately provided.

The antenna 307 includes antennas capable of detecting and emitting radio waves in, for example, the 2.4 GHz band, the 5 GHz band, and the 6 GHz band, respectively. Note that the antenna 307 may be configured to enable communication in the same frequency band. In this case, the antenna 307 may be a multi-band antenna that enables communication in a plurality of frequency bands, for example. FIG. 3 shows an example in which the communication apparatus includes two antennas; however, one antenna, or three or more antennas may be used. Note that, in a case where the communication apparatus includes a plurality of antennas, the communication apparatus may include communication units 306 respectively corresponding to the antennas. Note that the antenna 307 may be provided separately from the communication unit 306, or may be configured as one module together with the communication unit 306.

FIG. 4 is a block diagram showing an example of the functional configuration of the AP (AP 101 and AP 111). The AP includes, for example, a PCH communication control unit 401, an NPCH communication control unit 402, and a threshold notification unit 403. Note that these functions may be implemented, for example, by the control unit 302 executing the program stored in the storage unit 301 of the AP. However, these are merely examples, and dedicated hardware that implements each of the functions may be provided. Note that the configurations shown in FIG. 4 are merely examples, and the AP may include configurations other than these configurations. Two or more functional blocks shown in FIG. 4 may be implemented as one functional block, and one functional block may be divided into two or more functional blocks.

The PCH communication control unit 401 performs communication by establishing, with the STA, one link that collectively uses one or more channels including a PCH. For example, the PCH communication control unit 401 receives a radio frame from an STA that is currently connected to the AP and that has acquired a transmission right on the PCH, or the PCH communication control unit 401 acquires a transmission right on the PCH by itself, and transmits a radio frame to the STA. The NPCH communication control unit 402 performs communication using NPCH access in a case where a PCH is used by another apparatus and the AP cannot use the PCH. For example, in a case where an NAV is set (e.g., by being used by an OBSS) on the PCH, the NPCH communication control unit 402 confirms that the SPCH is in the idle state, and acquires a transmission right on the NPCH. Then, in a case where a transmission right has been acquired on the NPCH, the NPCH communication control unit 402 transmits a radio frame using one or more NPCHs including the SPCH, without using the PCH. Also, the NPCH communication control unit 402 receives the radio frame transmitted using NPCH access by the STA currently connected to the AP. The threshold notification unit 403 notifies a threshold that relates to the length of the NAV and that is used by the STA currently connected to the AP for determining whether or not to execute NPCH access. Note that the NPCH communication control unit 402 determines whether or not to execute NPCH access by comparing the threshold notified to the STA in the threshold notification unit 403, and the length of the NAV set on the PCH.

FIG. 5 is a block diagram showing an example of the functional configuration of the STA (STA 102 and STA 112). The STA includes, for example, a PCH communication control unit 501, a threshold reception unit 502, and an NPCH communication control unit 503. Note that these functions may be implemented, for example, by the control unit 302 executing the program stored in the storage unit 301 of the STA. However, these are merely examples, and dedicated hardware that implements each of the functions may be provided. Note that the configurations shown in FIG. 5 are merely examples, and the STA may include configurations other than these configurations. Two or more functional blocks shown in FIG. 5 may be implemented as one functional block, or one functional block may be divided into two or more functional blocks.

The PCH communication control unit 501 performs the same control as that performed by the PCH communication control unit 401 of the AP. That is, the PCH communication control unit 501 performs communication by establishing, with the AP, one link that collectively uses one or more channels including a PCH. For example, the PCH communication control unit 501 receives a radio frame from an AP to which the STA is connected and that has acquired a transmission right on the PCH, or the PCH communication control unit 501 acquires a transmission right on the PCH, and transmits a radio frame to the AP. The threshold reception unit 502 receives, from the AP, a threshold that relates to the length of an NAV and that is used for determining whether or not to execute NPCH access. The NPCH communication control unit 503 determines whether or not to execute NPCH access by comparing the threshold received in the threshold reception unit 502, and the length of the NAV set on the PCH.

### (Flow of Processing)

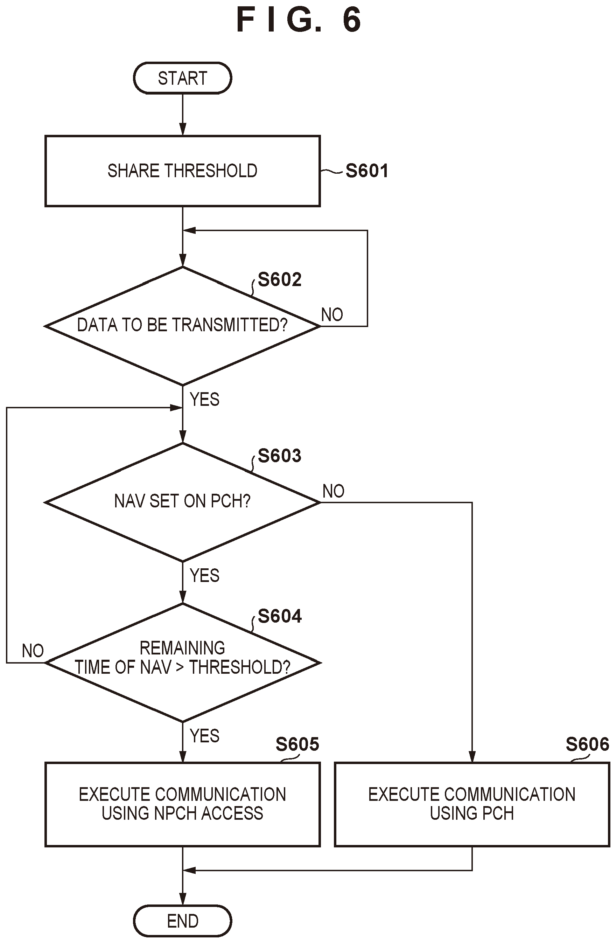

Next, an example of a flow of processing executed by the communication apparatus (AP and STA) will be outlined with reference to FIG. 6. First, the AP and the STA share the threshold that relates to the length of the NAV and that is used for determining whether or not to execute NPCH access (S601). That is, the AP notifies the information regarding the threshold to the STA.

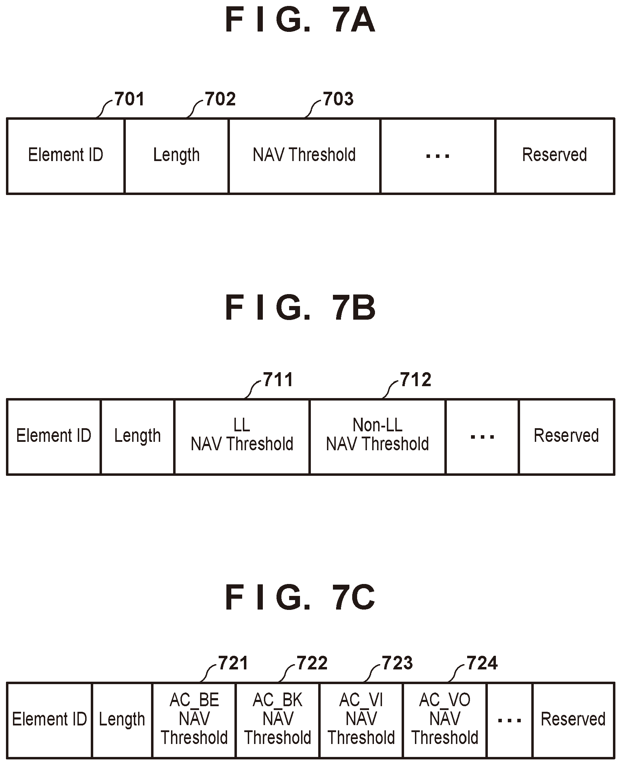

The AP transmits, for example, a radio frame including an information element as shown in FIG. 7A to the STA. The information element shown in FIG. 7A may be an information element that is used to notify parameters for NPCH access, for example. This information element is referred to here as a Non Primary Channel Access (NPCA) Parameter Set element; however, as the standardization progresses, the same information element with a different name may be used, for example. In this information element, Element ID 701 stores a value indicating that this information element is an NPCA Parameter Set element. Length 702 stores a value indicating the length of this information element. Also, NAV Threshold 703 stores the above-described information regarding the threshold. Note that this information element may include other information. Although the NAV Threshold 703 is placed immediately after the Length 702 in FIG. 7A, other information may be included between the Length 702 and the NAV Threshold 703. Note that, in the illustrated example, a threshold is notified as part of parameters for NPCH access; however, information regarding the threshold may be included in another information element. Note that the information element shown in FIG. 7A is included, for example, in a beacon frame, and APs may be sent out periodically. Also, the information element shown in FIG. 7A may be included in a Probe Response frame, which is a probe response to a probe request (Probe Request frame) from the STA. Note that this information may be included in a frame (e.g., an Association Response frame or the like) that is transmitted/received during connection processing, or may be included in an Action frame after connection has been established.

Thereafter, when data to be transmitted has been generated (YES in S602), the AP and the STA determine whether an NAV due to communication using an OBSS is set on a PCH (S603). If an NAV due to communication using an OBSS is not set on the PCH (NO in S603), the AP and the STA perform communication using the PCH (S606). That is, based on confirmation that the PCH is in the idle state by executing a carrier sense, the AP and the STA acquire a transmission right on the PCH (and NPCH). Then, the AP and the STA perform, for example, transmission of data and reception of an acknowledgement response (ACK) within a period for which the transmission right has been acquired. On the other hand, if an NAV due to communication using an OBSS is set on the PCH (YES in S603), the AP and the STA determine whether or not the remaining time of the NAV exceeds the threshold shared in S601 (S604). Then, if the remaining time does not exceed the threshold (NO in S604), the AP and the STA wait until the timer of the NAV on the PCH expires (until the determination in S603 is NO), and perform transmission of the radio frame using the PCH (S606). On the other hand, if the remaining time exceeds the threshold (YES in S604), the AP and the STA perform communication using NPCH access (S605). That is, in a case where the AP and the STA have executed a carrier sense in an SPCH, and have acquired a transmission right on an NPCH, the AP and the STA perform, for example, transmission of data and reception of an ACK using the NPCH within the period for which the transmission right has been acquired. Note that, in a case where the remaining time period of the NAV on the PCH is below the threshold without being able to acquire a transmission right on the NPCH, the AP and the STA may not perform communication using NPCH access. That is, the AP and the STA may continuously execute the determination in S604 during the processing in S605. Note that the communication using the NPCH access may be executed within a period until the NAV on the PCH expires. That is, the AP and the STA may execute communication control such that communication using NPCH access ends at a timing at which use of the PCH is enabled.

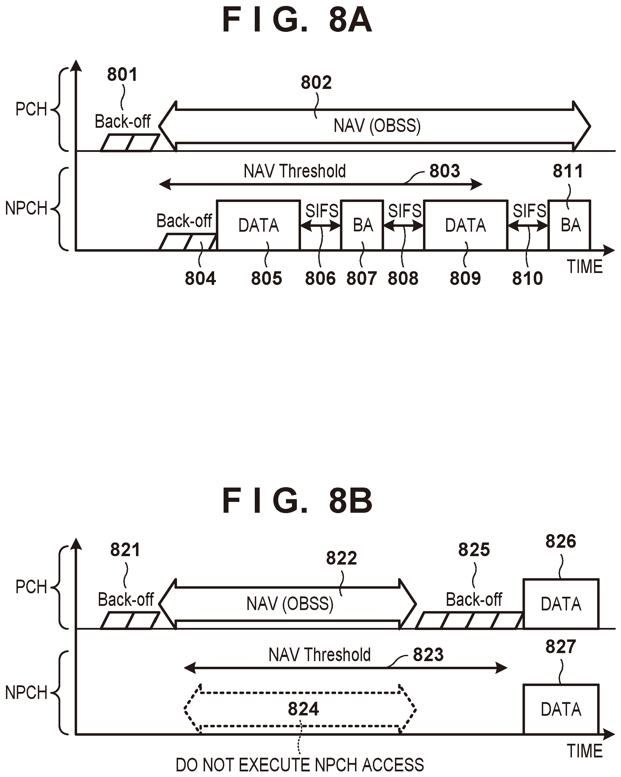

Next, an example of communication control according to the present embodiment will be described with reference to FIGS. 8A and 8B. In FIG. 8A, the AP 111 or the STA 112 confirms that the PCH is in the idle state over a predetermined period 801, and transmits, for example, a Request to Send (RTS) or a Clear to Send (CTS). Then, the AP 101 or the STA 102 sets an NAV 802 so as not to perform transmission of a signal during the period specified by the RTS or the CTS. That is, the AP 101 or the STA 102 sets an NAV for the PCH due to communication using an OBSS, and performs control so as not to perform transmission of a radio frame using the PCH until the period of the NAV expires. Then, since the NAV has been set on the PCH, in a case where the AP 101 or the STA 102 has data to be transmitted, the AP 101 or the STA 102 determines whether or not to execute NPCH access. At this time, a threshold 803 of the length of the NAV shared between the AP 101 and the STA 102, and the length of the remaining time of the NAV on the PCH are compared. Then, if it is confirmed that the remaining time of the NAV on the PCH is longer than the threshold 803, the AP 101 and the STA 102 determine to execute NPCH access. Then, after confirming that the SPCH is in the idle state over a predetermined period 804, for example, the AP 101 and the STA 102 transmit data 805 on the NPCH. After an elapse of an SIFS (Short IFS) 806 after the data 805 has been transmitted, an acknowledgement response (Block Ack (BA)) 807 follows, and data communications 808 to 811 are repeated in the same manner until the NAV 802 expires. Note that the AP 101 and the STA 102 may perform communication so that communication using NPCH access has been completed upon expiration of the NAV 802. The AP 101 or the STA 102 may secure a transmission opportunity (TXOP) only for a period necessary for the AP 101 or the STA 102 to transmit data, and may end data communication in response to the expiration of the TXOP. That is, the AP 101 and the STA 102 may execute transmission/reception of a radio frame such that data communication is completed before the expiration of the NAV 802 or the expiration of the TXOP.

In FIG. 8B as well, the AP 111 or the STA 112 confirms that the PCH is in the idle state over a predetermined period 821, and transmits an RTS or a CTS, for example. Then, the AP 101 or the STA 102 sets an NAV 822 accordingly. Then, since an NAV has been set on the PCH, in a case where data to be transmitted is generated, the AP 101 and the STA 102 compare the remaining time of the NAV at that time and a threshold 823 to determine whether or not to execute NPCH access. In the example shown in FIG. 8B, the remaining time of the NAV is shorter than the threshold 823. Therefore, the AP 101 and the STA 102 make a determination 824 not to execute NPCH access. Accordingly, the AP 101 and the STA 102 wait until the NAV 822 expires, and thereafter transmit data 826 using the PCH, in response to the PCH having been in the idle state for a predetermined period 825. At this time, in a case where no NPCH is used, the AP 101 and the STA 102 can transmit data 827 using an NPCH at the same time. That is, the AP 101 and the STA 102 can perform communication using the PCH and one or more NPCHs on one link.

As a result of a threshold of the remaining time of the NAV on the PCH for determining whether or not to execute NPCH access being notified from the AP to the STA in this manner, it is possible to prevent NPCH access from being tried even though there is not a sufficient remaining time. Further, as a result of a common threshold being used for multiple STAs, the multiple STAs can fairly acquire a transmission right using NPCH access.

Although the above description shows an example in which one threshold is notified, a plurality of thresholds may be used. For example, a first threshold for transmitting data requiring low latency (hereinafter referred to as "LL"), and a second threshold for transmitting data not requiring LL may be notified. In this case, for example, the first threshold is set to be smaller than the second threshold. Thus, for the data requiring LL, communication using NPCH access can be preferentially executed in a situation in which an NAV due to an OBSS has been set on the PCH. In this case, for example, as shown in FIG. 7B, an information element extended from the information element shown in FIG. 7A is transmitted from the AP to the STA. The information element shown in FIG. 7B includes LL NAV Threshold 711 indicating a first threshold for data requiring LL, and Non-LL NAV Threshold 712 indicating a second threshold for data not requiring LL. Here, the first threshold may be set to be shorter than the second threshold. By receiving this information element, the STA may try NPCH access in a case where an NAV due to an OBSS that has a remaining time greater than or equal to the first threshold is set on the PCH for the data requiring LL. On the other hand, for the data not requiring LL, even if an NAV due to an OBSS that has a remaining time greater than or equal to the first threshold is set on the PCH, the STA does not execute NPCH access in a case where the remaining time of the NAV is below the second threshold. For the data not requiring LL, the STA executes NPCH access in a case where an NAV due to an OBSS that has a remaining time greater than or equal to the second threshold is set on the PCH.

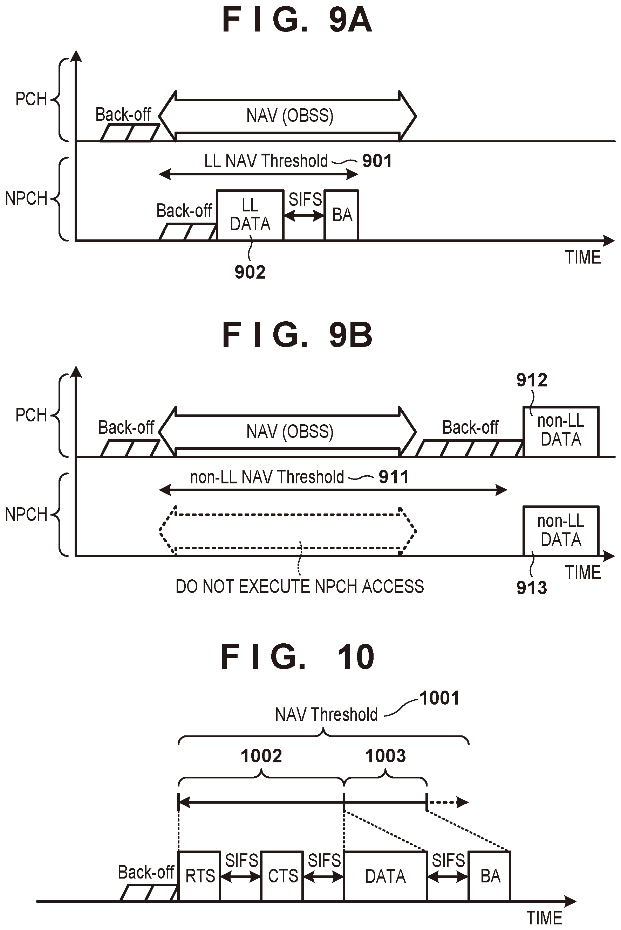

An example of communication control in which a plurality of thresholds are used in this manner will be described with reference to FIGS. 9A and 9B. Note that, in the example shown in FIGS. 9A and 9B, it is assumed that an NAV for communication using an OBSS is set on the PCH as in the case of the example shown in FIGS. 8A and 8B. FIG. 9A shows an example in which the AP and the STA have detected generation of data to be transmitted that requires LL. In this case, the AP and the STA compare a first threshold 901 of the NAV that is used for transmitting the data requiring LL, and the remaining time of the NAV. Then, the AP and the STA execute NPCH access for transmission of the data requiring LL in a case where the remaining time of the NAV is longer than the first threshold 901, and transmit data 902 requiring LL in a case where a transmission right has been acquired on an SPCH. FIG. 9B shows an example in which the AP and the STA have detected generation of data to be transmitted that does not require LL. Note that the length of the NAV for communication using an OBSS that is set on the PCH at this time is the same as that in the case of FIG. 9A. Here, it is assumed that a second threshold 911 for the data not requiring LL is greater than the first threshold 901 for the data requiring LL. The AP and the STA compare the second threshold 911 and the remaining time of the NAV. Here, the example illustrated in FIG. 9B shows a case where the second threshold 911 is greater than the remaining time of the NAV. In this case, the AP and the STA wait until the NAV on the PCH expires, without executing NPCH access. Then, upon acquiring a transmission right after the expiration of the NAV, the AP and the STA transmit data 912 (and 913) on the PCH, and on the NPCH as needed.

According to such a procedure, for data whose latency requirement is stringent and that is to be transmitted as early as possible, the probability that NPCH access is executed can be increased, thus shortening the amount of time taken from generation of data to transmission of the data. On the other hand, data whose latency requirement is not stringent need not be transmitted immediately. Therefore, for such data, a threshold greater than that for the data that has stringent latency requirement is set, thus making it possible to realize fair channel access between STAs. Note that whether or not the latency requirement is stringent may be determined, for example, based on the access category (AC) of data. For example, data whose AC is voice (AC_VO) and video (AC_VI) is determined to be data requiring LL, and data whose AC is background (AC_BK) or best effort (AC_BE) is determined to be data not requiring LL. Only AC_VO may be determined to be data requiring LL, and other data may be handled as data not requiring LL. Whether or not data requires LL may be associated in advance with each data to be transmitted for each Traffic Identifier (TID) corresponding to that data. For example, the AP and the STA determine whether data to be transmitted requires LL, using information in which predefined AC or TID is associated with a value indicating whether or not the data requires LL. When transmitting the data, the AP and the STA can determine whether or not to perform NPCH access, using a threshold corresponding to the result of the determination.

Note that a plurality of levels of thresholds may be set according to the level of latency requirement. For example, a first threshold relating to first data whose latency requirement is most stringent (with minimum required latency) is set to the smallest value, and a second threshold relating to second data whose latency requirement is the next most stringent is set to the next smallest value. A third threshold relating to third data whose latency requirement is the next most stringent to that of the second data is set to be a value larger than the second threshold, and a threshold relating to data whose latency requirement is least stringent (e.g., with no latency requirement) is set to be the largest value. That is, multiple levels of thresholds are set such that the shorter the required latency, the smaller the value of the threshold is. If necessary, NPCH access need not be permitted for specific data (e.g., data without a latency requirement).

A plurality of levels of thresholds may be set according to the access category. That is, separate thresholds are respectively set for AC_VO, AC_VI, AC_BK, and AC_BE. In this case, for example, an information element as shown in FIG. 7C may be transmitted from the AP to the STA. Note that, instead of a threshold for each access category, a threshold for each TID may be notified. The threshold may be determined according to an expected data length for each category or TID, irrespective of the required latency. That is, the threshold may be determined such that NPCH access is executed in a case where communication using NPCH access is expected to be completed before the NAV expires on the PCH, irrespective of the required latency. NPCH access need not be permitted for data regarding some access categories or TIDs. Note that, in a case where NPCH access is not permitted irrespective of the remaining time of the NAV, the threshold notified in FIGS. 7A to 7C may be set to a predetermined value such as a maximum value representable, including, for example, "0".

Note that the threshold may be set based on the time required for data transmission/reception. For example, as shown in FIG. 10, in a case where data is transmitted after an RTS and a CTS have been transmitted, and a BA to that data is transmitted, a threshold 1001 according to the time lengths of these frames is set. Here, the time length required for data communication is a time length obtained by adding the time length of the data to the sum of a time length 1002 from transmission of the RTS to start of transmission of the data, and a time length 1003 from completion of transmission of the data to completion of transmission of the BA. Here, since the time length of data is variable, the threshold may be set to a value exceeding at least the sum of the time length 1002 and the time length 1003. That is, a value exceeding a value obtained by adding the time length of the RTS, the time length of the CTS, the time length of the BA (ACK), and a time length three times the SIFS is set as the threshold. Note that the threshold may be set as a value obtained by adding, to this lowest value, a time length equivalent to the data length. Here, the time length equivalent to the data length may be set based on, for example, a statistically obtained standard data amount. This prevents a threshold below the minimum required time from being set, thus making it possible to prevent NPCH access from being continued after the NAV expires in PCH. It is also possible to at least shorten the time during which NPCH access is performed after the NAV has expired on the PCH.

For example, in the AP, a transmission right can be acquired by transmitting a CTS-self without transmitting an RTS. Accordingly, a value exceeding a value obtained by adding the time length of the CTS, the time length of the BA (ACK), and a time length twice the SIFS may be used as the threshold. That is, different thresholds may be set in the AP and the STA. In some cases where communication is performed without using an RTS or a CTS, or where other additional radio frames need to be transmitted, the minimum threshold may be determined based on the number of radio frames that are to be actually transmitted and the number of SIFSs between the radio frames. Note that, in a case where each communication is performed using the configuration as shown in FIG. 10, the threshold notified from the AP to the STA may be specified as "0", which is a value obtained by adding the time length of the RTS, the time length of the CTS, the time length of the BA (ACK), and a time length three times the SIFS. In a case where radio frames are transmitted in various formats, such as a case where transmission of RTS/CTS is not performed, and a case where additional frames are used, the required minimum time length may individually vary between those formats. In this case, the threshold may be notified, using the minimum value of a plurality of minimum time lengths corresponding to those plurality of formats as a reference value indicating the required minimum time length. That is, in a case where the threshold is represented as X and the value indicating the required minimum time length is represented by Y, "X-Y" may be notified from the AP to the STA as the information indicating the threshold.

Note that the role of the AP in the above description may be performed by the STA. For example, the above-described threshold may be set, for example, when the STA communicates with another STA.

With the above-described configuration, it is possible to prevent NPCH access from being continued unnecessarily after an NAV due to communication using an OBSS has expired on a PCH, thus enabling more efficient use of a frequency resource. As a result of a common threshold being provided to STAs under an AP, it is possible to ensure fairness of channel access when NPCH access is performed. Furthermore, using a plurality of thresholds enables, for example, control to facilitate execution of NPCH access according to the data type or the like.

Aspects of the present invention can also be implemented through processing in which a program for implementing one or more functions of the above-described exemplary embodiments is supplied to a system or apparatus via a network or storage medium and one or more processors included in the system or apparatus read and execute the program. Additionally, aspects of the present invention can also be implemented by circuits (e.g., application specific integrated circuits (ASIC)) that implement the one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2023-179769 filed October 18, 2023, which is hereby incorporated by reference herein.

## Claims

1. A communication apparatus for performing communication compliant with an IEEE 802.11 standard series, the communication apparatus comprising:
communication means for establishing a first network, and performing communication with another communication apparatus belonging to the first network using one of a first channel access scheme, in which at least a predetermined Primary in one link is used, and a second channel access scheme, in which, in a case where a period is set during which the other communication apparatus does not perform transmission of a radio frame using the Primary channel due to communication in a second network different from the first network, the Primary channel is not used and one or more Non-Primary channels different from the Primary channel among a plurality of channels included in the link are used; and
notification means for notifying, to the other communication apparatus, information indicating a threshold relating to a length of the period and according to which the other communication apparatus is permitted to use the second channel access scheme in a case where the length of the period set in the other communication apparatus exceeds the threshold.

2. The communication apparatus according to claim 1, wherein
the notification means notifies, to the other communication apparatus, information indicating a first threshold for determining whether transmission of data requiring low latency is permitted, and a second threshold for determining whether transmission of data not requiring low latency is permitted, as the information indicating the threshold.

3. The communication apparatus according to claim 1, wherein
the notification means notifies, to the other communication apparatus, information indicating a threshold for determining, for each access category, whether transmission of data in the access category is permitted, as the information indicating the threshold.

4. The communication apparatus according to claim 1, wherein
the notification means notifies, to the other communication apparatus, information indicating a threshold for determining, for each Traffic Identifier (TID), whether transmission of data to which the TID is attached is permitted, as the information indicating the threshold.

5. The communication apparatus according to any one of claims 1 to 4, wherein
the threshold is set to a value greater than a value obtained by adding a Request to Send (RTS), a time length of a Clear to Send (CTS), a time length of an acknowledgement response, and a time length three times a Short Interframe Space (SIFS).

6. The communication apparatus according to any one of claims 1 to 5, wherein
notification of a predetermined value as the threshold indicates that the second channel access scheme is not permitted to be used, irrespective of the length of the period.

7. The communication apparatus according to claim 1, wherein
the notification means transmits a beacon frame that includes the information indicating the threshold.

8. The communication apparatus according to any one of claims 1 to 7,
**characterized in that**
the notification means transmits a Probe Response frame that includes the information indicating the threshold.

9. A communication apparatus for performing communication compliant with an IEEE 802.11 standard series, the communication apparatus being **characterized by** comprising:
communication means for joining a first network established by another communication apparatus, and performing communication with the other communication apparatus using one of a first channel access scheme, in which at least a predetermined Primary channel in one link is used, and a second channel access scheme, in which, in a case where a period is set during which the communication apparatus does not perform transmission of a radio frame using the Primary channel due to communication in a second network different from the first network, the Primary channel is not used and one or more Non-Primary channels different from the Primary channel among a plurality of channels included in the link are used;
reception means for receiving information indicating a threshold relating to a length of the period from the other communication apparatus;
determination means for determining, in a case where the period is set during which the communication apparatus does not perform transmission of a radio frame using the Primary channel due to communication in the second network, whether or not a length of a remaining time of the period exceeds the threshold; and
control means for performing, based on determination that the length of the remaining time of the period exceeds the threshold, control so as to communicate with the other communication apparatus using the second channel access scheme.

10. The communication apparatus according to claim 9, **characterized in that**
the reception means receives, from the other communication apparatus, information indicating a first threshold for determining whether transmission of data requiring low latency is permitted, and a second threshold for determining whether transmission of data not requiring low latency is permitted, as the information indicating the threshold.

11. The communication apparatus according to claim 9, **characterized in that**
the reception means receives, from the other communication apparatus, information indicating a threshold for determining, for each access category, whether transmission of data in the access category is permitted, as the information indicating the threshold.

12. The communication apparatus according to claim 9, **characterized in that**
the reception means receives, from the other communication apparatus, information indicating a threshold for determining, for each Traffic Identifier (TID), whether transmission of data to which the TID is attached is permitted, as the information indicating the threshold.

13. The communication apparatus according to any one of claims 9 to 12,
**characterized in that**
the threshold is set to a value greater than a value obtained by adding a Request to Send (RTS), a time length of a Clear to Send (CTS), a time length of an acknowledgement response, and a time length three times a Short Interframe Space (SIFS).

14. The communication apparatus according to any one of claims 9 to 13,
**characterized in that**
notification of a predetermined value as the threshold indicates that the second channel access scheme is not permitted to be used, irrespective of the length of the remaining time of the period.

15. The communication apparatus according to any one of claims 9 to 14,
**characterized in that**
the reception means receives the information indicating the threshold in a beacon frame received from the other communication apparatus.

16. The communication apparatus according to any one of claims 9 to 14,
**characterized in that**
the reception means receives the information indicating the threshold in a Probe Response frame received from the other communication apparatus.

17. A control method executed by a communication apparatus, the communication apparatus establishing a first network, and performing, with another communication apparatus belonging to the first network, communication compliant with an IEEE 802.11 standard series using one of a first channel access scheme, in which at least a predetermined Primary in one link is used, and a second channel access scheme, in which, in a case where a period is set during which the other communication apparatus does not perform transmission of a radio frame using the Primary channel due to communication in a second network different from the first network, the Primary channel is not used and one or more Non-Primary channels different from the Primary channel among a plurality of channels included in the link are used, the control method being **characterized by** comprising:
notifying, to the other communication apparatus, information indicating a threshold relating to a length of the period and according to which the other communication apparatus is permitted to use the second channel access scheme in a case where the length of the period set in the other communication apparatus exceeds the threshold.

18. A control method executed by a communication apparatus, the communication apparatus joining a first network established by another communication apparatus, and performing, with the other communication apparatus, communication compliant with an IEEE 802.11 standard series using one of a first channel access scheme, in which at least a predetermined Primary channel in one link is used, and a second channel access scheme, in which, in a case where a period is set during which the communication apparatus does not perform transmission of a radio frame using the Primary channel due to communication in a second network different from the first network, the Primary channel is not used and one or more Non-Primary channels different from the Primary channel among a plurality of channels included in the link are used, the control method being **characterized by** comprising:
receiving information indicating a threshold relating to a length of the period from the other communication apparatus;
determining, in a case where the period is set during which the communication apparatus does not perform transmission of a radio frame using the Primary channel due to communication in the second network, whether or not a length of a remaining time of the period exceeds the threshold; and
performing, based on determination that the length of the remaining time of the period exceeds the threshold, control so as to communicate with the other communication apparatus using the second channel access scheme.

19. A program for causing a computer to function as the means included in the communication apparatus according to any one of claims 1 to 16.
